Europäisches Patentamt

European Patent Office

Office européen des brevets

(11) Publication number: **0 313 416 B1**

# EUROPEAN PATENT SPECIFICATION

(45) Date of publication of patent specification: **23.08.95**   (51) Int. Cl.6: **F16C 1/26**

(21) Application number: **88309993.9**

(22) Date of filing: **24.10.88**

The file contains technical information submitted after the application was filed and not included in this specification

(54) **Conduit made of PTFE and Poly(amide-imide).**

(30) Priority: **23.10.87 US 111867**
**07.10.88 US 253547**

(43) Date of publication of application:
**26.04.89 Bulletin  89/17**

(45) Publication of the grant of the patent:
**23.08.95 Bulletin  95/34**

(84) Designated Contracting States:
**DE ES FR GB IT**

(56) References cited:
DE-A- 2 227 790     GB-A- 1 207 304
GB-A- 1 309 672     US-A- 3 015 969
US-A- 4 099 425     US-A- 4 112 708
US-A- 4 362 069     US-A- 5 045 600
US-A- 5 161 427

Elias, H.-G.: "Neue polymere Werkstoffe 1969-1974", München/Wien 1975, pp. 137 to 153

Elias, H.-G.: "Macromolecules: synthesis, materials and technology", New York, 1984, p. 1214, table 36-9, second last and last column.

(73) Proprietor: **TELEFLEX INCORPORATED**
**155 S. Limerick Road**
**Limerick**
**Pennsylvania 19468 (US)**

(72) Inventor: **Fukuda, Diane P.**
**Butterfly Hill**
**Jaffrey**
**New Hampshire 03452 (US)**
Inventor: **Eldredge, Arthur S, Jr.**
**105 Elm Hill Road**
**Petersborough**
**New Hampshire 03458 (US)**
Inventor: **Buck, Thomas F.**
**3 Butternut Drive**
**Keene**
**New Hampshire 03431 (US)**

(74) Representative: **Geldard, David Guthrie et al**
**UROUHART-DYKES AND LORD**
**Tower House**
**Merrion Way**
**Leeds**
**West Yorkshire LS2 8PA (GB)**

Concise Encyclopaedia of Polymer Science and Engineering, 1990, pp. 758-760, 768-770, 826-828

The Penguin Dictionary of Chemistry, second edition, pp. 320 and 321

"Organic Chemistry" by John McMurry, 1984, pp. 1154-1156

"Polymers; Chemistry and Physics of Modern Materials" by J.M.G. Cowie, 1973, pp. 15-17

## Description

This invention relates to a motion transmitting remote control assembly for transmitting motion in a curved path by a flexible motion transmitting core element. More particularly, this invention relates to liners for supporting the core element in such motion transmitting assemblies.

### BACKGROUND ART

Remote control assemblies utilizing liners are well known in the prior art (US-A-4362069). Such assemblies are typically used in automotive, marine, and aviation environments. Typically, a core element, which comprises a wire member or a plurality of metallic strands helically wound together in cable-like fashion, is disposed within the liner and adapted for longitudinal movement therein. Similarly, the movement of the core element within the liner may be rotational as in the case of a speedometer cable. The core element as it moves in the liner, produces frictional forces which abrade the interior of the liner, eventually resulting in failure or wear unacceptable of the liner.

United States Patent No. 4,362,069 issued December 7, 1982 to Giatras et al discloses a liner wherein polytetrafluoroethylene (PTFE) is coextruded with an arylene sulfide polymer to produce a liner having improved wear and friction characteristics. Additives, such as lubricating fluids or glass are also included in the composite prior to extrusion to produce a liner with the desired properties.

### SUMMARY OF INVENTION AND ADVANTAGES

The present invention provides a remote control assembly of the type for transmitting motion in a curved path comprising a liner made of a fluorocarbon polymer, and a core element adapted for movement within the liner. The assembly is characterized by the liner including 3% poly-(amide-imide) for increasing the strength and lubricity thereof.

Accordingly, the present invention provides a liner in accordance with claim 6 having increased wear and friction characteristics. Further, the present invention is advantageous in that it needs no additives (such as lubricating fluids or glass) for improving the lubricity and wear resistance of the liner.

### FIGURES IN THE DRAWINGS

Other advantages of the present invention will be readily appreciated as the same becomes better understood by reference to the following detailed description when considered in connection with the accompanying drawings wherein:

FIGURE 1 is a fragmentary plan view partially in cross-section of a remote control assembly made in accordance with the present invention;

FIGURE 2 is a cross-sectional view taken along lines 2-2 of Figure 1;

FIGURE 3 is a graphical representation of comparative test results of liners;

FIGURE 4 is a graphical representation of further comparative test results and

FIGURE 5 shows the results of another arc test which was performed in the manner described above, with the exception that no lubricant was used. As indicated, the liner 12 made in accordance with the instant invention exhibited a high lubricity.

### DETAILED DESCRIPTION OF THE DRAWINGS

Referring to the drawings, a remote control assembly of the type for transmitting motion in a curved path is generally shown at 10 in the figures.

The assembly 10 includes a liner 12. The liner 12 is generally circular in cross-section and is made essentially of polytetrafluoroethylene (PTFE). PTFE is sold under the trademark TEFLON by Dupont. The liner 12 is disposed within a conduit generally indicated at 11. The conduit 11 may be any one of various configurations, however, it preferably includes a plurality of long lay wires 18 having a casing 16 extruded thereabout.

The assembly further includes a core element 14. The core element 14 can be a wire member, or a plurality of metallic strands helically wound together in a cable-like fashion. The core element is adapted for movement within the liner. This movement may either be longitudinal, i.e., in the same direction as the liner 12, or rotational as in a speedometer cable. Further, the core element may have a coupling member (not shown) disposed about the end thereof to attach the core element 14 to an operated or operating member.

The assembly 10 further includes mounting means for securing the conduit 11 to a support structure (not shown). The mounting means comprises a flange 20 extending from the conduit 11. A hole 22 is provided in the flange 20 for securing the flange 20 with a support structure.

The assembly 10 is characterized by the liner 12 including poly(amide-imide). Poly(amide-imide) is commercially available from the Amoco Chemical Company and is sold under the trademark TORLON. A liner 12 is made by preparing a composite of PTFE and poly(amide-imide). The composite is then extruded to form the liner 12. The liner 12 comprises between 75 weight percent and 99 weight percent PTFE and between 25 weight percent and 1 weight percent poly(amide-imide) respectively. Preferably, the liner comprises 97 weight percent of PTFE and 3 weight percent poly-(amide-imide). Conduits made in accordance with the present invention result in a strong product having high abrasion and friction (i.e. lubricity) resistances.

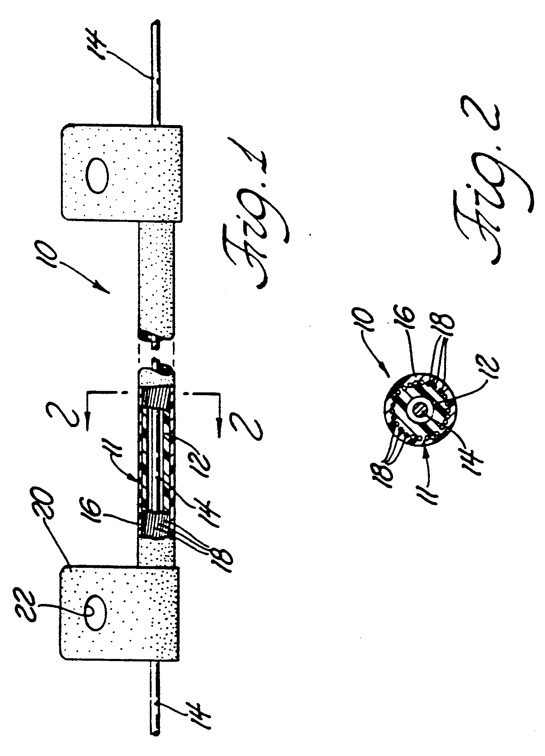

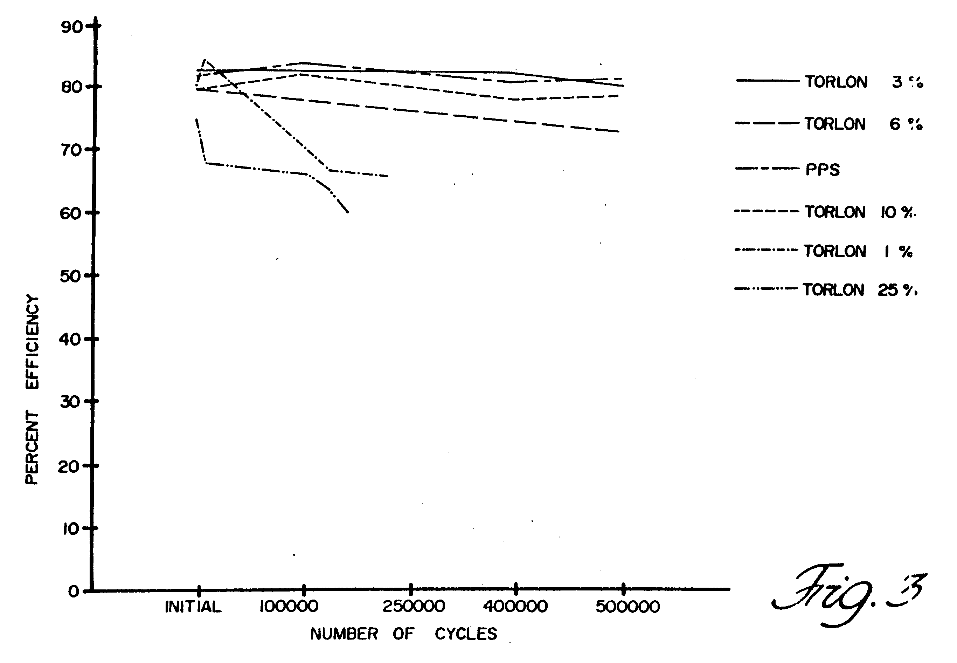

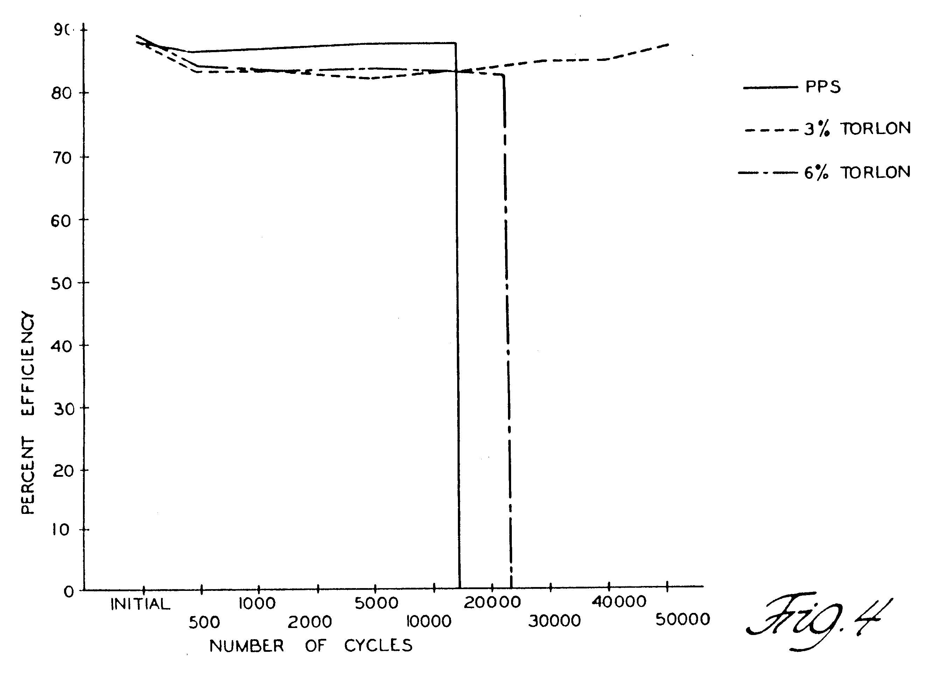

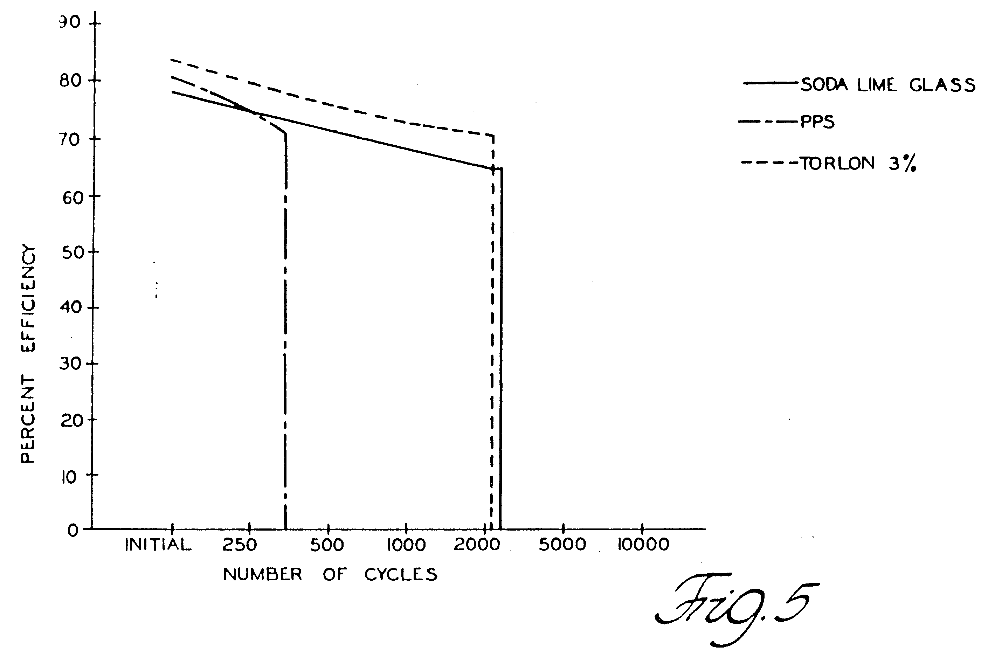

Five liners made in accordance with the subject invention were made and tested. These liners contained 1, 3, 6, 10, and 25 weight percent poly-(amide-imide), respectively. Also, a liner made using PTFE and an arylene sulfide polymer, labeled PPS in Figures 3 and 4, was made and tested. The first test (results in Figure 3) consisted of forming a liner 12 into an "S" shape. A core element 14 was lubricated with a suitable lubricant. A small loop was made in one end of the core element for attaching five pounds of weight thereto. The core element was then reciprocated through the liner at a rate of sixty cycles per minute. One cycle consisted of drawing the core element in a forward direction a distance of 41,3 mm (one and five-eights inches), and then returning the core element to its initial position. The 3, 6 and 10 weight percent poly(amide-imide) liners were run through approximately 500,000 cycles. The 1 and 25 weight percent liners were run through approximately 220,000 cycles.

The frictional efficiencies were measured at various intervals of cycles as follows: one end of the core element is connected to a transducer. A 2,3 kg (five pound) weight was connected to the other end. The core element was cycled through the liner at a rate of four cycles per minute. The actual loads required to raise the 2,3 kg (five pound) weight, as measured by the transducer, were recorded for three cycles and averaged. To calculate the frictional efficiency the following equation was used:

Efficiency = (2,3 kg (5lbs)/average actual load) x 100

The test results are plotted in Figure 3. As shown, all of the liners made in accordance with the present invention had an efficiency of greater than 60%. The 1 weight percent poly(amide-imide) conduit represents the lower effective concentration limit of poly(amide-imide). That is, if less than 1 weight percent is used, the conduit does not have the necessary abrasion resistance and abrades too rapidly. The 25 weight percent poly(amide-imide) conduit represents the upper effective concentration limit. If more that 25 weight percent poly-(amide-imide) is used, the TEFLON portion of the conduit forms insufficiently, resulting in a conduit which abrades too easily.

The second test consisted of passing a core element 14 through a trough formed by utilizing a half of a liner (a liner cut along the longitudinal axis). Thirty-six pounds of weight were applied to one end of the core element. The core element was then lubricated and reciprocated through the trough a distance of approximately 36,5 mm (one and seven-sixteenths inches) at a rate of thirty cycles per minute.

The frictional efficiency was measured at various intervals of cycles as follows: a tension force transducer was connected to one end of the core element. A known weight was connected to the other end of the core element. The core element was then reciprocated through approximately 36,5 mm (one and seven sixteenths inches) at a rate of two cycles per minute. The acual force required to raise the weight (FR) and the actual load required to lower the weight (FL) were measured and averaged over three cycles. The efficiency was then calculated using this following formula:

$$Efficiency = \sqrt{\frac{FL}{FR}} \times 100$$

The results are plotted in Figure 4. As demonstrated by the Figure, the liners made in accordance with the invention having 3 weight percent poly(amide-imide) had an efficiency of over 75% at every cycle interval. The conduit containing 6 weight percent poly(amide-imide) failed at approximately 22,000 cycles. Also, the PPS liner failed, i.e., wore through, at approximately 19,000 cycles. The one percent and twenty-five percent poly-(amide-imide) liners were not subjected to the arc test.

FIGURE 5 shows the results of another arc test which was performed in the manner described above, with the exception that no lubricant was used. As indicated, the liner 12 made in accordance with the instant invention exhibited a high lubricity.

Poly(amide-imide) filled liners of the invention exhibit superior wear resistance in the arc test. In addition, these liners demonstrate superior lubricity and wear resistance in the arc test when performed without lubrication.

The invention has been described in an illustrative manner, and it is to be understood that the terminology which has been used is intended to be in the nature of words of description rather than of limitation.

## Claims

1. A remote control assembly (10) of the type for transmitting motion in a curved path, said assembly (10) comprising: a conduit (11); a liner (12) made of a fluorocarbon polymer disposed in said conduit (11); and a core element (14) adapted for movement within said liner (12), said assembly (10) characterised by said liner (12) including poly(amide-imide) dispersed substantially uniformly throughout the fluorocarbon polymer for increasing the strength and lubricity of the liner (12), said liner (12)

   comprising 97 weight percent fluorocarbon polymer and 3 weight percent poly(amide-imide).

2. An assembly as claimed in claim 1 wherein said fluorocarbon polymer is polytetrafluoroethylene.

3. An assembly as claimed in claim 1 wherein said conduit (11) comprises a plurality of long lay wires (18) having an extruded casing.

4. An assembly as claimed in claim 3 wherein said assembly (10) includes mounting means for mounting said conduit (11) to a support structure.

5. An assembly as claimed in claim 4 wherein said mounting means comprises a flange (20) extending from said conduit (11).

6. A remote control assembly liner (10), the assembly being of the type for transmitting motion in a curved path, said liner made from a fluorocarbon polymer and characterised by including poly(amide-imide) dispersed substantially uniformly throughout the liner (12) for increasing the strength and the lubricity thereof, said liner (12)

   comprising 97 weight percent fluorocarbon polymer and 3 weight percent poly(amide-imide).

## Patentansprüche

1. Fernsteuerungsaufbau (10) des Typs zur Bewegungsübertragung auf einer Kurvenbahn, wobei der Aufbau (10) enthält: eine Führungshülle (11), eine Buchse (12) aus einem Fluorocarbon-Polymer, welche in der Führungshülle (11) angeordnet ist, und ein Kernelement (14), welches zur Bewegung in der Buchse (12) angepaßt ist, wobei der Aufbau (10) gekennzeichnet ist durch die Buchse (12), welche Poly(amid-imid) enthält, welches im wesentlichen gleichförmig überall im Fluorocarbon-Polymer verteilt ist, um die Stärke und Schmierfähigkeit der Buchse (12) zu erhöhen, wobei die Buchse (12) 97 Gewichtsprozent Fluorocarbon-Polymer und 3 Gewichtsprozent Poly(amid-imid) enthält.

2. Aufbau nach Anspruch 1, worin das Fluorocarbon-Polymer Polytetrafluorethylen ist.

3. Aufbau nach Anspruch 1, worin die Führungshülle (11) eine Vielzahl von Längsschlagdrähten (18) mit einer extrudierten Ummantelung enthält.

4. Aufbau nach Anspruch 3, worin der Aufbau (10) Befestigungsmittel zur Befestigung der Führungshülle (11) an einer Trägerstruktur enthält.

5. Aufbau nach Anspruch 4, worin die Befestigungsmittel einen Flansch (20) enthalten, welcher sich von der Führungshülle (11) wegerstreckt.

6. Fernsteuerungsaufbau-Buchse (10), wobei der Aufbau vom Typ zur Bewegungsübertragung auf einer Kurvenbahn ist und die Buchse aus einem Fluorocarbon-Polymer gemacht ist und gekennzeichnet ist durch das Enthalten von Poly(amid-imid), welches im wesentlichen gleichförmig überall in der Buchse (12) verteilt ist, um ihre Stärke und Schmierfähigkeit zu erhöhen, wobei die Buchse (12) 97 Gewichtsprozent Fluorocarbon-Polymer und 3 Gewichtsprozent Poly(amid-imid) enthält.

## Revendications

1. Assemblage de commande à distance (10) du type à transmission de mouvement sur une trajectoire courbe, ledit assemblage (10) comprenant: un conduit (11), une chemise (12) faite d'un poly(fluorocarbone) placée dans ledit conduit (11), et un élément formant coeur (14) adapté pour se déplacer à l'intérieur de ladite chemise (12); ledit assemblage (10) est caractérisé en ce que ladite chemise (12) comprend du poly(amide-imide) réparti de manière sensiblement uniforme dans le poly(fluorocarbone) de manière à augmenter la résistance et la lubricité de la chemise (12), ladite chemise (12) comprenant 97 pour cent en poids de poly(fluorocarbone) et 3 pour cent en poids de poly(amide-imide).

2. Assemblage selon la revendication 1 dans lequel ledit poly(fluorocarbone) est du polytétrafluoroéthylène.

3. Assemblage selon la revendication 1 dans lequel ledit conduit (11) comprend une pluralité de fils tordus simples (18) possèdant un revêtement extrudé.

4. Assemblage selon la revendication 3 dans lequel ledit assemblage (10) comprend des moyens de montage pour monter ledit conduit (11) sur une structure formant support.

5. Assemblage selon la revendication 4 dans lequel lesdits moyens de montage comprennent une bride (20) s'étendant à partir dudit conduit (11).

6. Chemise d'un assemblage de commande à distance (10), assemblage du type à transmission de mouvement sur une trajectoire courbe, ladite chemise étant faite d'un poly-(fluorocarbone) et caractérisée en ce qu'elle comprend du poly(amide-imide) réparti de manière sensiblement uniforme dans la chemise (12) pour augmenter la résistance et la lubricité de cette dernière, ladite chemise (12) comprenant 97 pour cent en poids de poly-(fluorocarbone) et 3 pour cent en poids de poly(amide-imide).

Fig. 1

Fig. 2

*Fig. 3*

PERCENT EFFICIENCY

NUMBER OF CYCLES

INITIAL  100000  250000  400000  500000

TORLON 3 %
TORLON 6 %
PPS
TORLON 10 %
TORLON 1 %
TORLON 25 %

EP 0 313 416 B1

8

Fig. 4

EP 0 313 416 B1

SODA LIME GLASS
PPS
TORLON 3%

PERCENT EFFICIENCY

NUMBER OF CYCLES

INITIAL 250 500 1000 2000 5000 10000

Fig.5